Europäisches Patentamt

European Patent Office

Office européen des brevets

(19)

(11) Veröffentlichungsnummer : **0 370 247 B1**

(12)

# EUROPÄISCHE PATENTSCHRIFT

(45) Veröffentlichungstag der Patentschrift :
**28.10.92 Patentblatt 92/44**

(51) Int. Cl.⁵ : **B61D 27/00, B61D 43/00**

(21) Anmeldenummer : **89119688.3**

(22) Anmeldetag : **24.10.89**

(54) **Vorrichtung zum Beheizen von Fahrgasträumen in Nahverkehrsfahrzeugen.**

(30) Priorität : **21.11.88 DE 3839271**

(43) Veröffentlichungstag der Anmeldung :
**30.05.90 Patentblatt 90/22**

(45) Bekanntmachung des Hinweises auf die
Patenterteilung :
**28.10.92 Patentblatt 92/44**

(84) Benannte Vertragsstaaten :
**BE CH DE ES FR LI NL SE**

(56) Entgegenhaltungen :
**DE-A- 2 006 802**
**DE-B- 1 060 427**
**DE-B- 1 159 005**

(73) Patentinhaber : **HAGENUK GMBH**
**Westring 431**
**W-2300 Kiel 1 (DE)**

(72) Erfinder : **Gaik, Gerd**
**Eckernförder Strasse 235 b**
**W-2301 Kronshagen (DE)**

(74) Vertreter : **Hansmann, Dierk, Dipl.-Ing.**
**Patentanwälte Hansmann-Klickow-Hansmann**
**Jessenstrasse 4**
**W-2000 Hamburg 50 (DE)**

Jouve, 18, rue Saint-Denis, 75001 PARIS

## Beschreibung

Die Erfindung bezieht sich auf eine Vorrichtung zum Beheizen von Fahrgasträumen in elektrisch betriebenen Nahverkehrsfahrzeugen mit einer äußeren Stromversorgung in Form eines Fahrdrahtes und Fahrmotoren während der Bremsphase als Generator umschaltbar sind, wobei ein steuerbarer Warmluftstrom vom Wärmespeicher und ein äußerer Luftstrom über eine Mischkammer dem Fahrgastraum über ein Gebläse zuführbar sind.

Eine gattungsgemäße Ausbildung ist nach der DE-B-1060427 bekannt geworden, wobei zum Beheizen von Fahrgasträumen die beim Bremsen anfallende elektrische Energie der Fahrmotoren in entsprechenden Bremswiderständen als Heizkörper vernichtet wird. Es besteht der Mangel, daß durch die unterschiedlichen Bremsvorgänge sowie die entsprechenden Zeitabstände zwischen den einzelnen Bremsvorgängen, es kaum möglich ist, eine entsprechend konstante Heizleistung zu erzielen.

Weiterhin ist es bekannt, durch eine Umschaltung des Fahrmotors während der Bremsphase als Generator die erzeugte Energie in die Versorgungsleitung zurückzugeben. Diese Rückspeisung ist aber nur sinnvoll, falls ein Verbraucher zur Verfügung steht, um die eingebrachte Energie auszunutzen.

Die Aufgabe der Erfindung ist es, eine Ausnutzung der Energie beim Bremsvorgang bei einer gattungsgemäßen Anordnung auf einfache Weise zu ermöglichen und eine Speichermöglichkeit der erzeugten Wärmeenergie mit einer konstanten Beheizung des Fahrgastinnenraumes zu gewährleisten.

Die Lösung dieser Aufgabe erfolgt erfindungsgemäß dadurch, daß eine Isolierkammer mit elektrischen Heizstäben als durchflutbarer Wärmespeicher angeordnet ist und die Heizstäbe über ein bremsabhängig schaltbares Steuerelement mit dem Fahrdraht bzw. direkt verbindbar sowie in Generatorschaltung des Fahrmotors versorgbar sind.

Hierdurch wird einmal die durch den Bremsvorgang erzeugte Energie ausgenutzt und zum anderen über einen Wärmespeicher eine Versorgungsquelle geschaffen, die über eine Mischkammer eine konstante Beheizung eines Fahrgastraumes unabhängig von der unterschiedlichen Betriebsweise auf einfache Weise gewährleistet.

Zur einfachen Anpassung an die vorliegenden Verhältnisse wird vorgeschlagen, daß die Temperatur des Wärmespeichers über einen Fühler erfaßbar und über eine Steuereinheit die Zuführung des Warmluftstromes und des äußeren Luftstromes zur Mischkammer über Steuerelemente nach einer vorgegebenen Kennlinie zur Einstellung der Beheizung des Fahrgastraumes steuerbar ist.

Um eine einfache Anpassung an die vorliegenden Verhältnisse zu schaffen, wird vorgeschlagen, daß die elektrischen Heizstäbe des Wärmespeichers wenigstens in drei getrennte Gruppen unterteilt sind und eine Gruppe für einen vorheizbetrieb und zwei Gruppen Wahlweise unter Berücksichtigung der Außentemperatur einschaltbar sind.

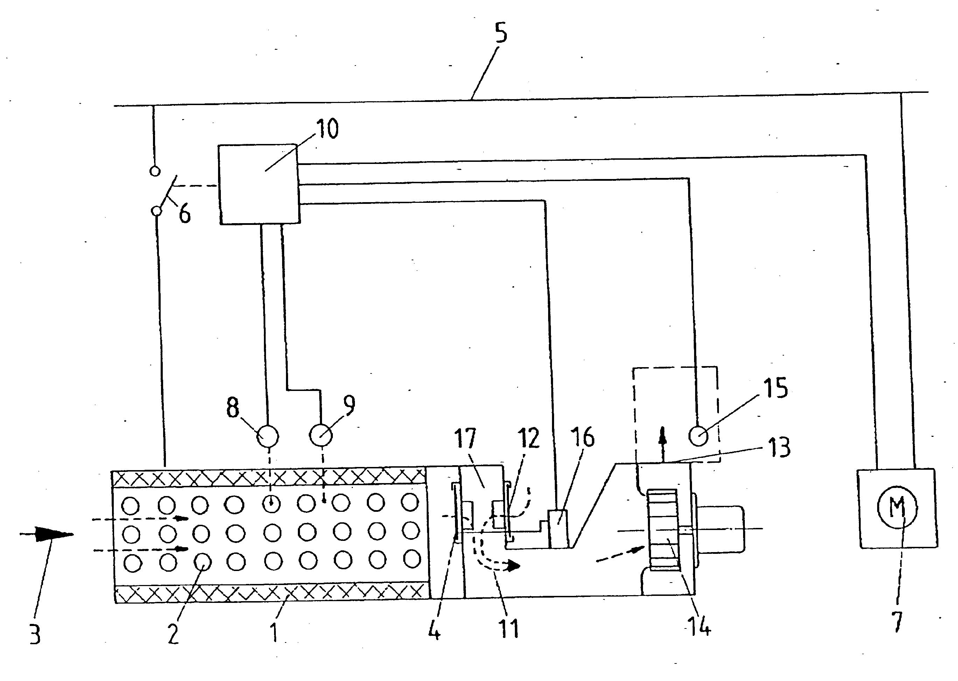

In der Zeichnung ist eine erfindungsgemäße Anordnung schematisch dargestellt. In der Praxis werden derartige Anordnungen auf dem Wagendach angeordnet und haben entsprechende Frischluftzufuhröffnungen.

Bei der dargestellten Anordnung ist eine Isolierkammer 1 mit einer Vielzahl elektrischer Heizstäbe 2 angeordnet, die zusammen einen durchflutbaren Wärmespeicher bildet, wobei in Pfeilrichtung Außenluft 3 zuführbar ist, die an der gegenüberliegenden Seite in einer Mischkammer 17 über die steuerbaren Schieber 4 und 12 als Warmluftstrom 11 wieder abziehbar ist.

Die Beheizung der elektrischen Heizstäbe 2 erfolgt nach einer gegebenenfalls erforderlichen Vorheizung von einem Fahrdraht 5 über einen Schalter 6, der beim Bremsbetrieb eines Fahrmotors 7 in Generatorschaltung die erzeugte Energie über den Fahrdraht 5 abgibt und den Schalter 6 betätigt. Hierdurch ist es gewährleistet, daß die erzeugte Energie über die Heizstäbe 2 verbraucht wird und keine Netzbelastung auftritt.

Die Isolierkammer 1 ermöglicht damit einen Aufbau eines Wärmespeichers, wobei die Umwandlung von elektrischer Energie in Wärmeenergie in der Bremsphase erfolgt. Während der anschließenden Fahrzeit, die in jedem Fall eine Vielzahl der Bremszeit beträgt, steht dann die gespeicherte Wärme zur Verfügung.

Die Isolierkammer 1 weist einen Temperaturfühler 8 und einen Übertemperaturschutz 9 auf, die mit einer Steuereinheit 10 verbunden sind und über die auch der Schalter 6 steuerbar ist.

Der Austritt der Isolierkammer 1, der über den Schieber 4 gesteuert wird, steht mit einer Mischkammer 17 in Verbindung, in die zusätzlich ein äußerer Luftstrom bzw. Umluftstrom über einer von einem Schieber 12 gesteuerten Öffnung zuführbar sind. Die Mischluft 11 wird über einen Austritt 13 mit einem angetriebenen Lüfterrad 14 dem Fahrgastraum zugeführt.

Durch einen im Fahrgastraum angeordneten Temperaturfühler 15, der ebenfalls mit der Steuereinheit 10 verbunden ist, wird der vorhandene Istwert mit dem vorgegebenen Sollwert verglichen. Über die Steuereinheit 10 mit einer vorgegebenen Kennlinie wird dann die Zuführung des Warmluftstromes aus der Isolierkammer 1 über den Schieber 4 und der äußere Luftstrom über den Schieber 12 gesteuert und der Mischkammer 17 zugeführt. Zur Betätigung der Schieber 4, 12 ist ein Stellmotor 16 vorgesehen, der eine Einstellung der Durchtritte ermöglicht. Hierbei schließt ein Schieber 4 bzw. 12 während der andere Schieber 12 bzw. 4 sich öffnet.

Durch das Lüfterrad 14 wird ein Unterdruck in der Mischkammer 11 erzeugt, so daß die entsprechend den vorliegenden Verhältnissen gemischten Luftströme dem Fahrgastraum zuführbar sind.

**Patentansprüche**

1. Vorrichtung zum Beheizen von Fahrgasträumen in elektrisch betriebenen Nahverkehrsfahrzeugen mit einer äußeren Stromversorgung in Form eines Fahrdrahtes und Fahrmotoren (7) während der Bremsphase als Generator umschaltbar sind, wobei ein steuerbarer Warmluftstrom vom Wärmespeicher (1,2) und ein äußerer Luftstrom (3) über eine Mischkammer (11) dem Fahrgastraum über ein Gebläse (14) zuführbar sind, dadurch gekennzeichnet, daß eine Isolierkammer (1) mit elektrischen Heizstäben (2) als durchflutbarer Wärmespeicher angeordnet ist und die Heizstäbe (2) über ein bremsabhängig schaltbares Steuerelement (6) mit dem Fahrdraht (5) bzw. direkt verbindbar sowie in Generatorschaltung des Fahrmotors (7) versorgbar sind.

2. Vorrichtung nach Anspruch 1, dadurch gekennzeichnet, daß die Temperatur des Wärmespeichers (1,2) über einen Fühler (8) erfaßbar und über eine Steuereinheit (10) die Zuführung des Warmluftstromes und des äußeren Luftstromes zur Mischkammer (11) über Steuerelemente (4,12,15) nach einer vorgegebenen Kennlinie zur Einstellung der Beheizung des Fahrgastraumes steuerbar ist.

3. Vorrichtung nach Anspruch 1 oder 2, dadurch gekennzeichnet, daß die elektrischen Heizstäbe (2) des Wärmespeichers wenigstens in drei getrennte Gruppen unterteilt sind und eine Gruppe für einen Vorheizbetrieb und zwei Gruppen wahlweise unter Berücksichtigung der Außentemperatur einschaltbar sind.

**Claims**

1. Apparatus for heating passenger compartments in electrically operated local trains, with an external power supply in the form of a travel wire and travel motors (7) are reversible as a generator during the braking phase, wherein a controllable hot air stream from the heat accumulator (1, 2) and an external air stream (3) are capable of being supplied via a mixing chamber (11) to the passenger compartment via a blower (14), characterised in that an insulating chamber (1) with electric heating elements (2) is provided as a heat accumulator capable of receiving a through-flow, and the heating elements (2) are connectable to the travel wire (5) either direct or via a control element (6) that is shiftable as a function of braking and are capable of receiving a power supply in the generator circuit of the travel motor (7).

2. Apparatus according to claim 1, characterised in that the temperature of the heat accumulator (1, 2) is detectable via a sensor (8), and the supply of the hot air stream and of the external air stream to the mixing chamber (11) is controllable via a control unit (10) via control elements (4, 12, 15) according to a specified characteristic line in order to adjust the heating of the passenger compartment.

3. Apparatus according to claim 1 or 2, characterised in that the electric heating elements (2) of the heat accumulator are divided into at least three separate groups and one group can be switched on for preheating and two groups optionally, taking into account the external temperature.

**Revendications**

1. Dispositif de chauffage des espaces pour voyageurs dans les véhicules de transport interurbains commandés électriquement, à alimentation en courant de l'extérieur par fil de contact ou de trolley et moteurs de traction (7), qui peuvent, pendant la phase de freinage, être commutés pour remplir le rôle de génératrice, un courant d'air chaud réglable (3), fourni, par l'accumulateur de chaleur (1, 2), et un courant d'air de l'extérieur , qui passent par une chambre de mélange (17), pouvant être amenés à l'espace réservé aux voyageurs par l'intermédiaire d'un ventilateur (14), le dispositif de chauffage étant caractérisé en ce qu'il est prévu une chambre d'isolation (1) avec éléments chauffants électriques (2) sous forme de barres comme accumulateur de chaleur pouvant être traversé par le courant, et en ce que les éléments chauffants (2) sous forme de barres peuvent être reliés, par un élément de réglage (6) pouvant être commandé en dépendance du freinage, au fil de contact ou de trolley (5), c'est-à-dire directement, et peuvent être alimentés par commutation du moteur de traction (7) en génératrice.

2. Dispositif suivant la revendication 1, caractérisé en ce que la température de l'accumulateur de chaleur (1, 2) peut être relevée par une sonde (8) et en ce qu'à l'intervention d'une unité de réglage (10), l'amenée du courant d'air chaud et du courant d'air de l'extérieur à la chambre de mélange (17) peut, par des éléments de réglage (4, 12, 15), être réglée suivant une courbe caractéristique donnée pour le réglage du chauffage de l'espace réservé aux voyageurs.

3. Dispositif suivant l'une ou l'autre des revendications 1 et 2, caractérisé en ce que les éléments chauffants électriques (2) sous forme de barres de l'accumulateur de chaleur sont répartis au moins en trois groupes distincts, et en ce qu'un des groupes peut être mis en circuit pour un fonctionnement.de préchauffage et que des groupes peuvent être facultativement mis en circuit selon la température régnant à l'extérieur.